# EUROPÄISCHE PATENTSCHRIFT

(11) **EP 2 501 957 B1**
(45) Veröffentlichungstag und Bekanntmachung des Hinweises auf die Patenterteilung: **15.08.2018**
(21) Anmeldenummer: 10767940.9
(22) Anmeldetag: 09.10.2010
(51) Int. Cl.: B23K 9/04, B23K 101/04, B23K 101/00, F16F 15/32

(54) **VERFAHREN ZUM WUCHTEN EINES MASSEBAUTEILS DURCH CMT-SCHWEISSEN**
METHOD FOR BALANCING A MASS COMPONENT BY MEANS OF CMT WELDING
PROCÉDÉ D'ÉQUILIBRAGE D'UN COMPOSANT D'INERTIE PAR SOUDAGE CMT (SOUDAGE PAR TRANSFERT DE MÉTAL À FROID)

(30) Priorität: 20.11.2009 DE 102009054103
(43) Veröffentlichungstag der Anmeldung: 26.09.2012
(73) Patentinhaber: Daimler AG, 70327 Stuttgart (DE)
(72) Erfinder: ANDERS, Christian, 71522 Backnang (DE); BUBAN, Tobias, 70186 Stuttgart (DE); EYSSELE, Gerd, 71686 Remseck (DE); GRUENER, Michael, 73337 Bad Überkingen (DE); HERRMANN, Ralf, 70192 Stuttgart (DE); HOLDGRUEN, Martin, 70378 Stuttgart (DE); MERTEN, Hans-Peter, 53520 Senscheid (DE); SCHWEIZER, Ulrich, 73117 Wangen (DE); STEINMETZ, Heiko, 73275 Ohmden (DE); ZOELLER, Christian, 70190 Stuttgart (DE)
(74) Vertreter: JENSEN & SON
(86) Internationale Anmeldenummer: PCT/EP2010/006175
(87) Internationale Veröffentlichungsnummer: WO 2011/060854

(56) Entgegenhaltungen:
- AT-A4- 506 217
- DE-A1- 3 434 304
- DE-A1-102005 057 750
- GB-A- 2 037 941
- JP-A- 63 040 829
- US-A- 4 998 448

## Beschreibung

Die vorliegende Erfindung betrifft ein Verfahren zum Wuchten eines rotierenden Massebauteils durch Auftragsschweißen von Schweißpunkten auf das Massebauteil, womit dessen Massensymmetrie bezüglich der Rotationsachse verbessert wird.

Schnell rotierende Bauteile benötigen nach ihrer Fertigstellung eine präzise Wuchtung für einen ruhigen Lauf bzw. zur Vermeidung von Schwingungen und Vibrationen. Nur somit kann der erforderliche Komfort insbesondere bei Kfz-Antrieben und die gewünschte Lebensdauer der Bauteile und Anbauteile erreicht werden.

Für Elektromotoren von Hybrid- und Elektrofahrzeugen werden häufig besonders hohe Wuchtgüten gefordert. Zur Erreichung dieser Wuchtgüten ist es erforderlich, beim Wuchtvorgang die jeweils bestimmte Masse flexibel hinsichtlich Ort und exakt dosiert hinsichtlich Masse aufzubringen bzw. zu entfernen.

Es gibt zwei grundsätzlich unterschiedliche Verfahrensvarianten für das Wuchten: Die erste Variante besteht in dem "Negativwuchten", bei dem gezielt Masse entfernt wird. Die zweite Variante besteht in dem "Positivwuchten", bei dem gezielt Masse hinzugefügt wird.

Zur Erzielung besonders hoher Wuchtgüten wird üblicherweise das Negativwuchten beispielsweise mittels Bohren eingesetzt. Durch die Bestimmung der Bohrtiefe sowie Anzahl oder Durchmesser der Bohrungen ist man in der Lage, voll automatisiert, flexibel und präzise auf die Belange jeder einzelnen Wuchtung zu reagieren.

Der Nachteil des Negativwuchtens ist jedoch, dass konstruktiv genügend Material zum Abtragen vorgehalten werden muss. Außerdem führt das Negativwuchten zu einer Bauteilschwächung an den abzutragenden Stellen und zu Spanbildung. Verschmutzungen wie Späne können gerade bei elektrischen Maschinen zu Funktionsbeeinträchtigungen führen, was einen sehr aufwendigen und sorgfältigen Fertigungsprozess erfordert.

Beim Positivwuchten ist bislang zur Erzielung hoher Wuchtgüten ein deutlich größerer Aufwand notwendig. Das Positivwuchten kann durch mehrere Verfahren ausgeführt werden. Beispielsweise kann ein Aufschweißen von Wuchtplättchen erfolgen. Dies gelingt z. B. mittels Widerstands- oder Laserschweißen. Nachteilig dran ist, dass eine sehr große Variantenvielfalt hinsichtlich Gewicht der Plättchen und eine spezielle Handhabung der Wuchtplättchen notwendig ist.

Darüber hinaus ist ein positives Wuchten durch Auftragsschweißen aus der GB 2 037 941 A bekannt, oder mittels konventionellem MIG/MAG-Schweißen möglich. Gemäß der Druckschrift EP 01 704 014 A1 sind unterschiedliche Schweißprozesse miteinander kombinierbar. Als ein Schweißprozess ist neben MIG/MAG auch ein Kalt-Metall-Transfer-Schweißprozess genannt.

Darüber hinaus können zum positiven Wuchten auch Wuchtplättchen aufgeklebt werden, oder es kann Klebstoff dosiert aufgebracht werden. Nachteilig an diesen aufgetragenen Massen ist jedoch deren rasche Alterung, geringe Dichte und Beständigkeit gegenüber Ölen, Fetten und Kraftstoffen.

Aus der Druckschrift EP 01 850 998 A1 ist ein Verfahren zum Steuern und/oder Regeln eines Schweißgeräts und ein Schweißgerät bekannt. Das Schweißgerät besitzt einen Schweißdraht, wobei nach dem Zünden eines Lichtbogens ein Kalt-Metall-Transfer-Schweißprozess (CMT) durchgeführt wird, bei dem der Schweißdraht bis zur Berührung mit dem Werkstück in Richtung des Werkstücks gefördert wird. Anschließend wird nach Bildung eines Kurzschlusses während einer Kurzschlussphase die Drahtförderrichtung umgekehrt und der Schweißdraht wird bis zum Aufbrechen des Kurzschlusses vom Werkstück wegbewegt. Der Stromfluss für den Schweißstrom wird dabei derart geregelt, dass während einer Lichtbogenphase eine Anschmelzung des Schweißdrahts, also eine Tropfenbildung, erfolgt.

Die Aufgabe der vorliegenden Erfindung besteht darin, das Wuchten eines rotierenden Massebauteils ohne Spanbildung und ohne Bauteilschwächung mit möglichst hoher Wuchtgüte und hohem Automatisierungsgrad zu erreichen.

Erfindungsgemäß wird diese Aufgabe gelöst durch ein Verfahren nach Anspruch 1. Vorteilhafte Weiterbildungen der Erfindung ergeben sich aus den Unteransprüchen.

Gemäß der vorliegenden Erfindung wird somit bereitgestellt ein Verfahren zum Wuchten eines rotierenden Massebauteils durch Auftragsschweißen von Schweißpunkten auf das Massebauteil, womit dessen Massesymmetrie bezüglich der Rotationsachse verbessert wird, wobei das Auftragsschweißen durch Kalt-Metall-Transfer-Schweißen erfolgt.

In vorteilhafter Weise ist somit ein sehr flexibel einsetzbares positives Wuchten möglich. Das Kalt-Metall-Transfer-Schweißen (CMT) ist ferner sehr gut automatisierbar, denn die aufzubringende Masse und die Lage der einzelnen Schweißpunkte lässt sich sehr gut automatisch berechnen. Darüber hinaus lässt sich mit dem CMT-Schweißen eine besonders hohe Wuchtgüte erzielen. Weitere Vorteile bestehen darin, dass es bei dem CMT-Schweißverfahren zu keiner Spanbildung kommt und außerdem keine Bauteilschwächung eintritt. Insbesondere ist aber auch kein Material vorzuhalten, wie bei negativem Wuchten, sodass es insgesamt zu einer Gewichtsersparnis kommt.

Vorzugsweise lässt sich das erfindungsgemäße Verfahren bei einem Rotor eines Elektromotors als rotierendes Massebauteil einsetzen. Insbesondere kann der Elektromotor ein Antriebsmotor für ein Kraftfahrzeug sein. Ferner ist es günstig, wenn eine für das Wuchten notwendige Masse durch eine Vielzahl von einzelnen Massepunkten aufgeschweißt wird. Hierbei kann die Anzahl und Lage der einzelnen Massepunkte automatisch bestimmt werden.

Die vorliegende Erfindung wird anhand der beigefügten Zeichnungen näher erläutert, in denen zeigen:
- Fig. 1: einen Rotor für negatives Wuchten gemäß dem Stand der Technik;
- Fig. 2: einen positiv gewuchteten Rotor gemäß der vorliegenden Erfindung und
- Fig. 3: den Rotor von Fig. 2 in einer anderen Ansicht.

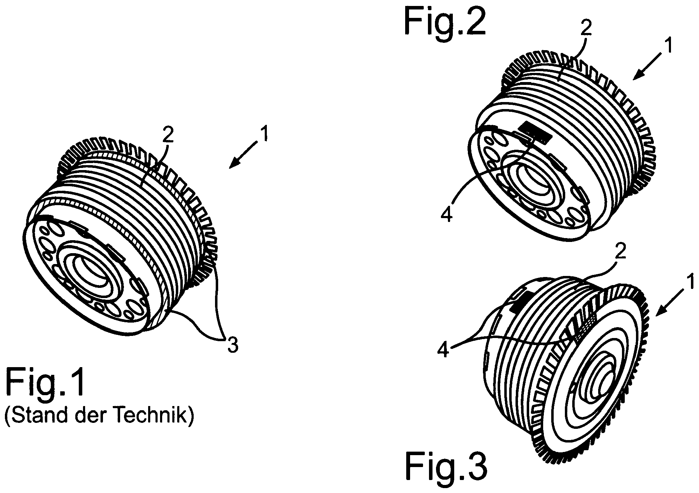

Die nachfolgend näher geschilderten Ausführungsbeispiele stellen bevorzugte Ausführungsformen der vorliegenden Erfindung dar. Zunächst wird jedoch zum besseren Verständnis der Erfindung anhand von Fig. 1 ein bekanntes, negatives Wuchtverfahren näher erläutert.

Fig. 1 zeigt einen Rotor 1 eines Elektromotors für den Antrieb eines Kraftfahrzeugs. Der Rotor 1 besitzt hier an beiden axialen Enden der Magnetanordnung 2 jeweils einen Wuchtring 3. Beim Wuchten werden Stellen an den Wuchtringen 3 ermittelt, an denen Material aus den Wuchtringen 3 durch Bohren herausgenommen werden kann. Hierbei wird nicht nur die Lage etwaiger Bohrungen, sondern auch deren Anzahl und/oder Größe bestimmt. Wie bereits einleitend erwähnt wurde, hat das negative Wuchten den Nachteil, dass zunächst Wuchtringe 3 auf den Rotor 1 aufzubringen sind, d.h. auf dem Massebauteil entsprechende Masse vorzuhalten ist. Dies führt zu einer erheblichen Gewichtszunahme. Wird dann das vorgehaltene Material, hier die Wuchtringe 3, beim Wuchten stark angebohrt, so führt dies zu einer unter Umständen gefährlichen Bauteilschwächung.

Aus den oben genannten Gründen wird daher ein positives Wuchten mittels geregelter CMT-Schweißtechnologie vorgeschlagen. Dabei wird gerade diejenige Masse, auf das Massebauteil aufgebracht, die zum Wuchten notwendig ist. Dadurch ergibt sich eine erhebliche Gewichtseinsparung gegenüber dem negativen Wuchten.

Bei der geregelten CMT-Schweißtechnologie besteht die Möglichkeit, definierte Massenpunkte im gewünschten Volumen aufzuschweißen. In den Figuren 2 und 3 sind auf dem Rotor 1 jeweils Felder 4 mit aufgeschweißten Massepunkten zu erkennen. Diese Felder 4 können an allen geeigneten Stellen des Rotors 1, insbesondere des Rotorträgers, ausgebildet sein. In dem Beispiel der Figuren 2 und 3 befindet sich ein solches Feld 4 mit Massenpunkten an einer Außenumfangsfläche und ein anderes Feld 4 an der Stirnseite des Rotors 1.

Je nach erforderlichem Gewicht kann die jeweilige Anzahl der Massenpunkte in der entsprechenden Lage aufgetragen werden. Aufgrund der Flexibilität hinsichtlich Anzahl der Massenpunkte und deren Ort ist eine Automatisierbarkeit sehr gut durchführbar. Durch die kleinen Massenpunkte, die bei der CMT-Schweißtechnologie erreicht werden können, lässt sich außerdem eine sehr hohe Wuchtgüte erzielen. Die Wärmeeinbringung bei dem CMT-Schweißprozess ist darüber hinaus im Vergleich zum konventionellen MIG/MAG-Schweißen sehr gering. Somit lässt sich beispielsweise ein sehr schwingungsarmer Elektromotor mit hoher Lebensdauer der Bauteile realisieren.

## Patentansprüche

1. Verfahren zum Wuchten eines rotierenden Massebauteils (1) durch
- Auftragsschweißen von Schweißpunkten auf das Massebauteil (1), womit dessen Massesymmetrie bezüglich der Rotationsachse verbessert wird, **dadurch gekennzeichnet, dass**
- das Auftragsschweißen durch Kalt-Metall-Transfer-Schweißen erfolgt und
- eine für das Wuchten notwendige Masse durch eine Vielzahl an einzelnen Massepunkten aufgeschweißt wird.

2. Verfahren nach Anspruch 1,
**dadurch gekennzeichnet, dass**
das rotierende Massebauteil (1) ein Rotor eines Elektromotors ist.

3. Verfahren nach Anspruch 2,
**dadurch gekennzeichnet, dass**
der Elektromotor ein Antriebsmotor für ein Kraftfahrzeug ist.

4. Verfahren nach einem der vorhergehenden Ansprüche,
**dadurch gekennzeichnet, dass**
die Anzahl und Lage der einzelnen Massepunkte automatisch bestimmt werden.

## Claims

1. Method for balancing a rotating mass component (1) by
- deposit-welding of welding spots onto the mass component (1), thereby improving its mass symmetry relative to the axis of rotation, **characterised in that**
- the deposit-welding is performed by means of cold metal transfer welding and
- a mass required for balancing is welded on by way of a plurality at individual mass points.

2. Method according to claim 1,
**characterised in that**
the rotating mass component (1) is a rotor of an electric motor.

3. Method according to claim 2,
**characterised in that**
the electric motor is a drive motor for a motor vehicle.

4. Method according to any of the preceding claims,
**characterised in that**
the number and the position of individual mass points are determined automatically.

## Revendications

1. Procédé destiné à équilibrer un composant de masse (1) rotatif par
- apport de métal par soudure de points de soudure sur le composant de masse (1), permettant ainsi d'améliorer la symétrie de masse par rapport à l'axe de rotation, **caractérisé en ce que** l'apport de métal par soudure s'effectue par soudage de transfert de métal froid et une masse nécessaire à l'équilibrage est soudée par une pluralité de points de soudure.

2. Procédé selon la revendication 1, **caractérisé en ce que** le composant de masse (1) rotatif est un rotor d'un moteur électrique.

3. Procédé selon la revendication 2, **caractérisé en ce que** le moteur électrique est un moteur d'entraînement pour un véhicule automobile.

4. Procédé selon l'une quelconque des revendications précédentes, **caractérisé en ce que** le nombre et la position de chacun des points de masse sont déterminés automatiquement.
